# EUROPEAN PATENT APPLICATION

(11) **EP 3 038 041 A1**
(43) Date of publication of application: **29.06.2016**
(21) Application number: 14461603.4
(22) Date of filing: 22.12.2014
(51) Int. Cl.: G06Q 30/02

(54) **Standard data structure for distribution of ads among advertisement portals and a method for automatic exchange of ads among advertisement portals**

(71) Applicant: Sensi Soft Sp. z o.o., 02-532 Warszawa (PL)
(72) Inventor: Batory, Stefan Dominik, 02-722 Warszawa (PL)
(74) Representative: Sielewiesiuk, Jakub

(57) **Abstract**

The invention relates to a standard data structure, in particular for the distribution of ads among advertisement portals, characterized in that it includes the following elements:
(a) Date - this is data describing unique to notice or auction information related to its content.
(b) Contact_info - this is data describing unique to notice or auction information related to its creator.
(c) The system - this is the describing unique to notice or auction information related to its importance and origin.
(d) Source - this is data describing unique to notice or auction information related to the source of its origin.
(e) Region - this is data describing unique to notice or auction information related to the area of origin.
(f) Category - this is data that describes a specific categories in the form of key words.

The invention is also an automatic exchange notices between each other.

## Description

Invention relates to standard data structures for distribution of ads among advertisement portals and a method for automatic exchange of ads among advertisement portals.

Online advertising market, including portals and message boards auction is characterized by a great diversity of data structures, in which are stored a single notification. There are currently no standard distribution of the notices between each other, and thus it environment, in which there may be a replacement. From the point of view of the functioning of portals, this has serious implications of a technical and business, in particular:
- Reducing the potential for expanding our services in the distribution of the notices or tender auction simultaneously on different portals. This is especially important from the point of view of competitiveness-building sites. Trend at the moment is visible for example in the traditional media (newspapers). Ability to publish notices in the various newspapers gives end-customer with the ability to sell or purchase, faster
- Reducing the efficiency portals - no more limited distribution final effect, which for final customer portals is the disposal or acquisition of capital goods,
- Improving the competitiveness of portals - portals advertising auction and increases regularly.

Today such a standard does not exist, although there are attempts to its establishment, which, as the only thing on the market, makes AdsML consortium (http://www.adsml.org/). Solution presented here by Sensi Soft product is so competitive, a unique way of storing data in terms of their structure and same as also offering all-in-one tool in a shared repository for announcements.

Sensi Soft wants to offer this to a product which will have added value in the form of exchange of data between each other.

Innovation projects is focusing on creating a standard distribution of the notices, which at the moment there is, at the level of both storylines in it, as well as for example information concluded in the notices, their publications, etc. innovation will be a process in relation to the rules of distribution of the notices, as well as product information - create an environment, which will allow the exchange.

In accordance with the present invention, standard data structures, in particular the distribution of the classified ads between each other is characterized by the fact that I am the following:
a) Date - data describing unique to notice or auction information related to its content.
b) Contact info - data describing unique to notice or auction information related to its creator.
c) The system - data describing unique to notice or auction information related to its importance and origin.
d) Source - data describing unique to notice or auction information related to the source of its origin.
e) Region - data describing unique to notice or auction information related to the area of origin.
f) Category - data describing specific categories in the form of key words.

Favorably, said the "date" data type is text, graphics, audio, video, or multimedia, in particular title of publication or notice or auction, auction, link to graphics or graphics in the form hulking mass Blob and binary, link to a video or video file in binary form, hulking mass Blob and link for a media file (for example, audio or video file in binary form, a hulking mass Blob and table custom fields.

Favorably, said the "contact_info" are text data type, in particular e-mail address author's notice or auction house phone number, author notice or auction, mobile phone number author notification or an auction, company name or store name author notice or auction, notice or auction, author's name, address of the author auction notice or notices, or auction.

Favorably, which is mentioned in the "system" are the time and date or numeric, in particular date of publication or auction system for aggregation, the date a notice or auction system, the period of validity in advertisements or auctions, assessment of notice.

Favorably, which is mentioned in the "source" is the text types, in particular the name of the source of origin notice or auction number, source address, notice to the notice source.

Favorably, said the "region" are text data type, especially the name of the country, the name of a region (state, county), postal code, state the name of the street.

In addition, in accordance with the present invention the automatic exchange between each notice, the system comprising at least one document repository is characterized by the fact that includes the following steps:
a) Create a file in a specified format, in particular XML, CSV, or JSON, containing the structure of the data according to a standardized format data structure according to any of the objections from 1 to 6 by mapping.
b) Importing data in a fixed format for the document repository.
c) Export selected data in a fixed format of the document repository.
d) Download export data in XML, JSON or CSV file format.

In addition, it includes file sharing, as referred to in step (d), for download URL.

### A positive example invention

An invention is now closer to presented in a favorable example, with reference to the attached drawings, in which:
Fig. 1 The login screen according to invention.
Fig. 2 Main page according to the invention.
Fig. 3 The interface mapping creation (format) for the imported file.

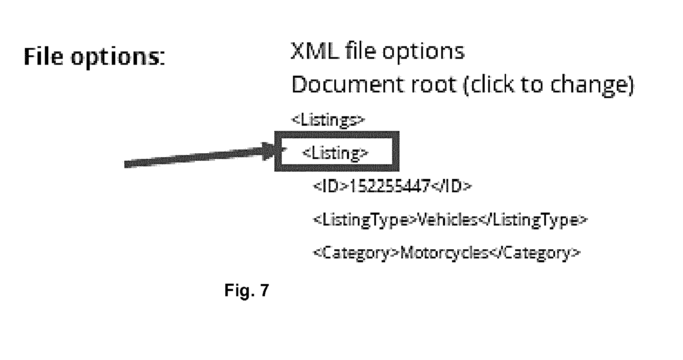

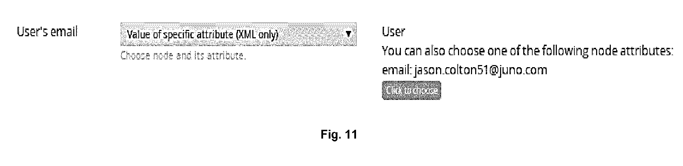

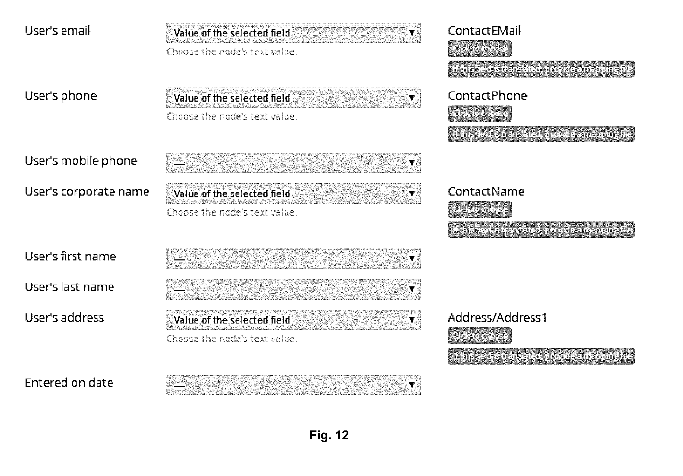

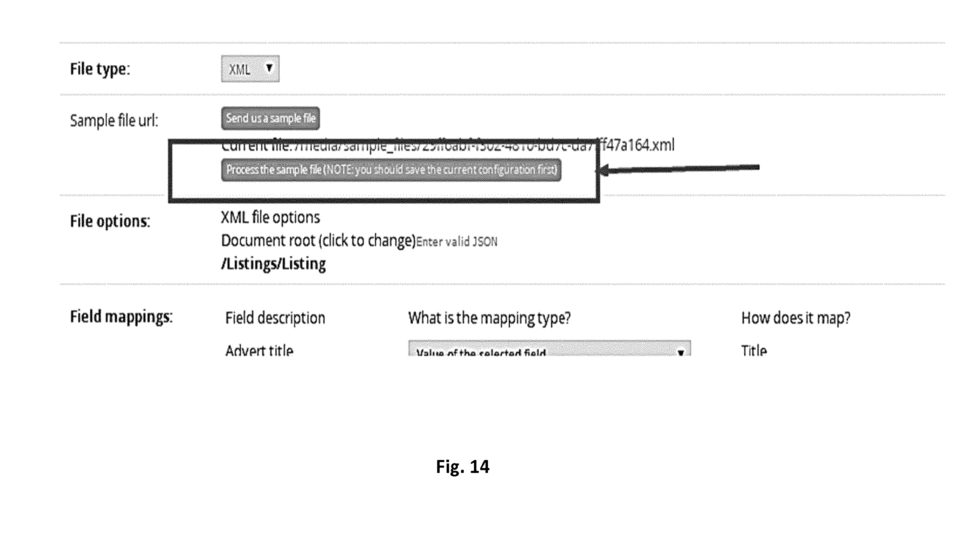

Fig. 4 - 14 shows steps during the mapping data.

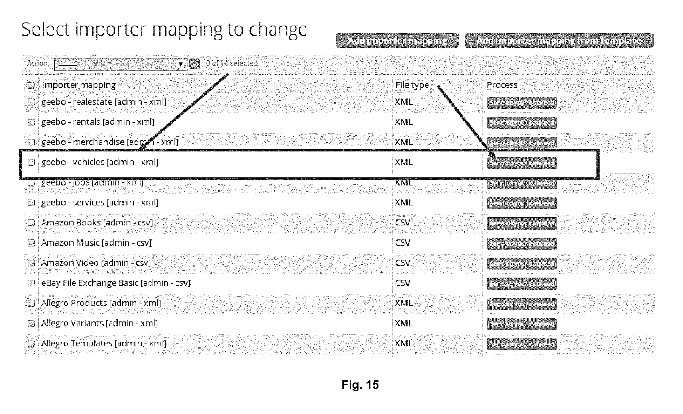

Fig. 15 - 16 shows steps during data import.
Fig. 17 - 21 shows steps during export data.

### Universal standard announcements

Basic Concept, adopted in invention was created in requirement no relacyjnosci model. Functioning in the past models and relational data storage structures, and the numerous links between the data (particularly in the context geographical regions and custom fields - this is information (Fields) typical for a particular implementation), and high fluctuation and circulation created data has necessitated the need to provide a solution that will allow it to create nierelacyjnej, documentary data structure. This structure is a practical model for efficient, extensible data format. The standard is as follows:

```
 Document: {
 'Contact_info': {
      -Al': ',
      'Phone': ',
      'mobile': ',
      'Corporate_name': ',
      'First_name': ',
      'Last_name': ',
      'ddress': ',
    },
  'Date': {
      'TITLE': ',
      'description': ',
    },
  'He': {
      'Entered_on':', ',
      'Created on': ',
      'Valid_til': ',
      'Pam_score':',
      'Feed_i':',
    },
  'OURCE': {
      'Ource_name': ',
      'Ource_i': ',
      'Ource_link': ',
    },
  'Region': {
      'country': ',
      'Tate': ',
      'City': ',
      'Zip': ',
      'Treet': ',
    },
  'category': {
      'Tag0': ',
      'Tag1 ': ',
      'Tag2 ': ',
      'Tag3 ': ',
    },
  'Medi': {},
  'Customfields': { },
 }
 }
```

### Standard has a minimum of six elements:

### 1. Date

Data describing unique to notice or auction information related to its text. Contains the following fields:
**'Date.title' (text) -** field describing title of publication or auction.
**'Date.description' (text) -** the box containing the notice or auction.
**'Image_1' (file) -** the box containing link to graphics or graphics in binary form hulking mass Blob and. The quantity field image is unlimited.
**'Image_n' (file) -** the box containing link to graphics hulking mass Blob and in binary form. The quantity field image is unlimited.
**'Video_1' (file) -** the box containing link to video or video file in binary form hulking mass Blob and. Number of boxes video is unlimited.
**'Video_n' (file) -** the box containing link to video or video file in binary form hulking mass Blob and. Number of boxes video is unlimited.
**'Media_1' (file) -** the box containing link to media file (for example, audio or video file in binary form hulking mass Blob and. Number of boxes video is unlimited.
**'Media_n' (file) -** the box containing link to media file (for example, audio or video file in binary form hulking mass Blob and. Number of boxes video is unlimited.
**'Customfields.date' (customfields) -** field in the format custom fields text containing a particular set custom fields. The fields within this structure are unlimited. **'custom fields.type' (customfields.type) - Definition of type of custom field.**

### 2. Contact_info

Data describing unique to notice or auction information related to its creator.
**'Contact_info.email' (text) -** e-mail address author notice or auction.
**'Contact_info.phone' (text)** - Telephone number author notice or auction.
**'Contact_info.mobile (text) -** mobile phone number author notice or auction.
**'Contact_info.corporate_name' (text) -** name of the company or store author notice or auction.
**'Contact_info.first_name' (text) -** author's name notice or auction.
   **'Contact_info.last name' (text) -** the author notices or auction.
   **'Contact_info.address' (text) -** address of the author notices or auction.

### 3. The System

Data describing unique to notice or auction information with its validity and origin.
'**ystem**.**entered**_**on datetime) -** date of entry' (notice or auction system for aggregation.
**'He system.created_on' (datetime) - the date** a notice or auction to the system.
**'ystem.valid_till' (datetime) -** the date of the notice or auction system.
'**ystem**.**spam**_**score**' **(integer) -** assessment of notice (after moderation or after using the anti-spam systems).

### 4. Source

Data describing unique to notice or auction information related to the source of its origin.
**'OURCE.source_name'** (text) - the name of the source of origin notice or auction.
**'OURCE.source_id'** (text) - Number of source.
**'Ource_link'** (link) - source address to be announced

### 5. Region

**'country'** (region.cloneable) - the name of the country. To match the existing dictionaries.
**'Region.state'** (cloneable) - the name of a region (state, county status). To match the existing dictionaries.
**'Region'** (cloneable.city) - the name of the city. To match the existing dictionaries.
**'Region.zip'** (cloneable) - postal code.
**'Region'** (cloneable.street) - the name of the street. To match the existing dictionaries.

### 6. Category

'**Category**.**tag0**' (text) - field describing specific category as key words. Can also contain structure source category. There is an unlimited field possibility in the existing standard.
**'Category., TAGN'** (text) - field describing specific category as key words. Can also contain structure source category. There is an unlimited possibility of fields in the existing standard.

### Description Examples

Tag0 : text - offer_to_buy, offer_for_sale, auction, floating rate, image_advert, video_advert, text_advert tag1 : text - car, restaurant, pet tag2 : text - Fiat, dog, cat, american grill
Tag3 : text - Fiat 126p, yorkshire terrier

### User Interface

It is an integral part of the system interface in the form of web service. The prototype of this service is available at an Internet address http://demo.ogloszeniowyagregator.pl. It also provides suppliers and consumers with streams notices the following functionality:
1. Can create own data format for data import and export
2. The ability to import your own data repository compatible with the defined file format by sending to the service type XML, JSON or CSV file.
3. Ability to export the data in a format compatible with the defined, for a given query and download them in the form of a XML, JSON and CSV
4. Access to log files, which are generated in the process data processing
5. Access to historical operations.

### PROTOTYPE description:

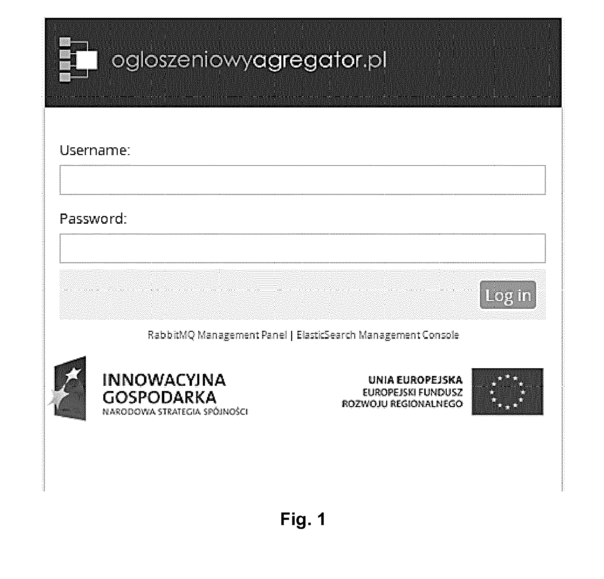

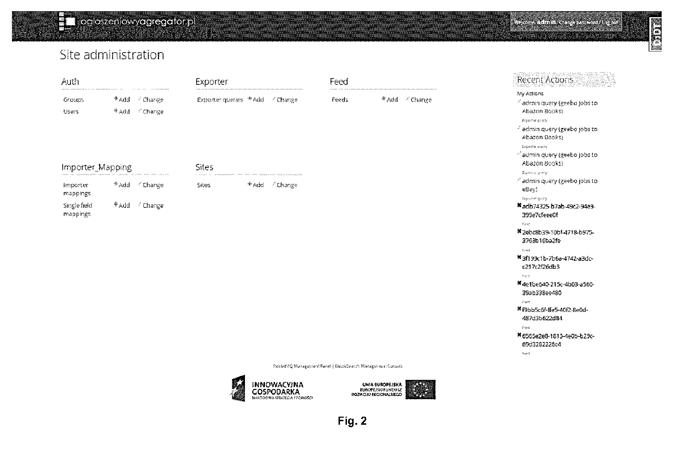

Once you have successfully logged on the home service (Fig. 1, 2). The most important functionality, links to monitoring tools and the history of previous action.

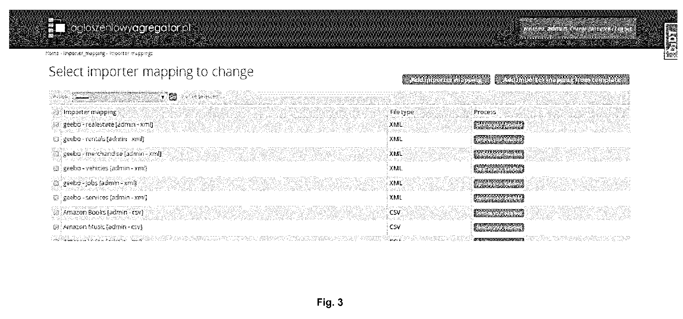

### Create mapping (format) for the imported file (fig. 3)

In order to create new mappings we link "importer" from the main page - this will reload the page presents listings mappings carried out so far.

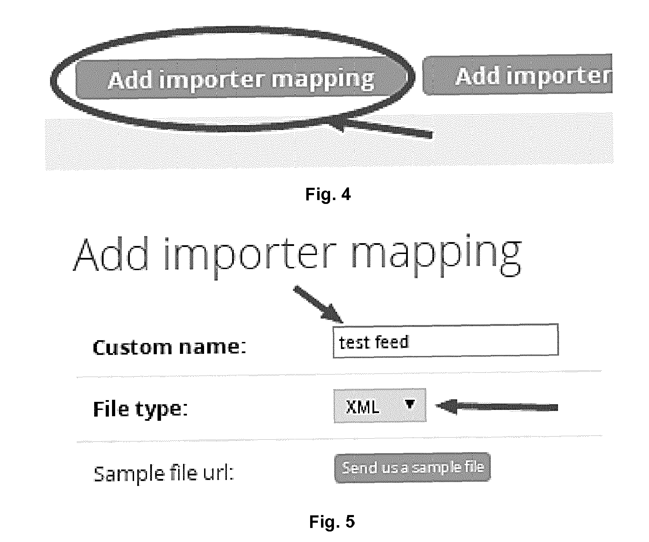

After pressing the button "Add importer Mapping" we are directed to the wizard to define a new Mapping (Fig. 4).

We join to create mapping definition. First of all, you need to determine the name and select the file type (supported formats are CSV and XML) (Fig. 5).

Then we'll send you an example file, containing a small amount of data. We'll use it to determine the source data for each field.

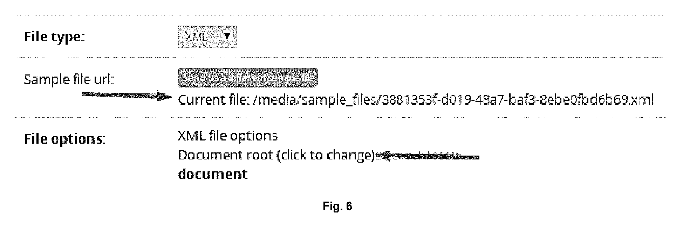

The File example we by pressing the "Send us a sample file" (fig. 6).

After saving the downloaded file URL to the location on the server.

The next step is to determine the root-for a single document in the file. By default it is set to the first element in the document. In order to amend it is pressed the button "click to change" (Fig. (7). The indicator light to view sample document, and then click on the element that is at the root of the notice. In the "File options" should be the name of the selected field.

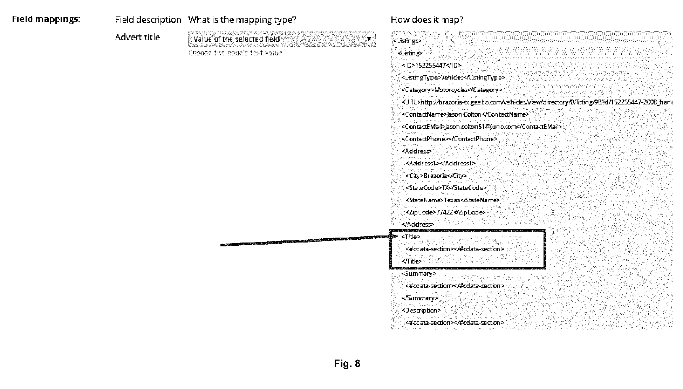

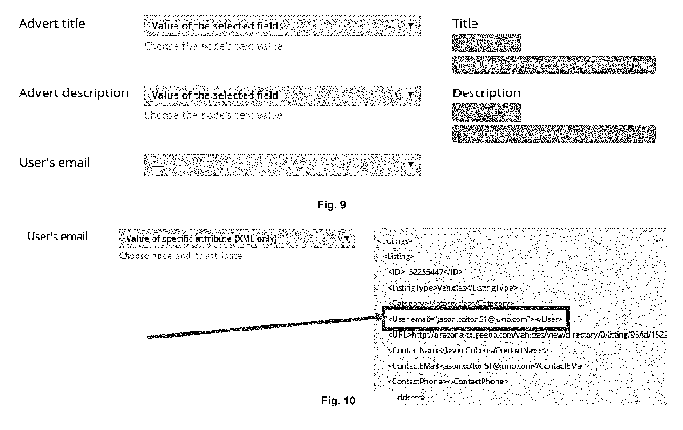

Then you can proceed to the definition of the fields of mappings. To this end we mapped field (e.g.: Glasses Advert title), we identify the type from the list and click the corresponding item from the file (e.g. : <title>) (Fig. 8, 9). Similarly when we for subsequent fields, defining mapping with the elements or attributes elements (Fig. As much as 10- 12).

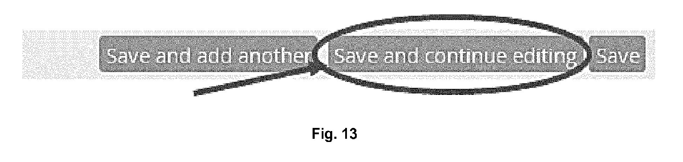

When you have finished defining mappings all the fields we can check that the correct created by us definition by selecting the button "Save and Continue Editing" (Fig. 13).

If there is no errors we can make import verification sample file, by selecting the 'Process sample file" (Fig. (14).

Define mapping and finish by selecting the "Save" from the toolbar at the bottom of the page. This will redirect you to the list of predefined mappings.

### Data Import.

After you have saved your definition created mapping will be shown in the list.

We can now make data import, by selecting the "Send us your data feed" located in the right-hand column from the name mapping (Fig. (15).

After pressing the "Send us your data feed" we are asked to display a file from a disk. The file is then uploaded to the server, which will be presented in the form of progress bar.

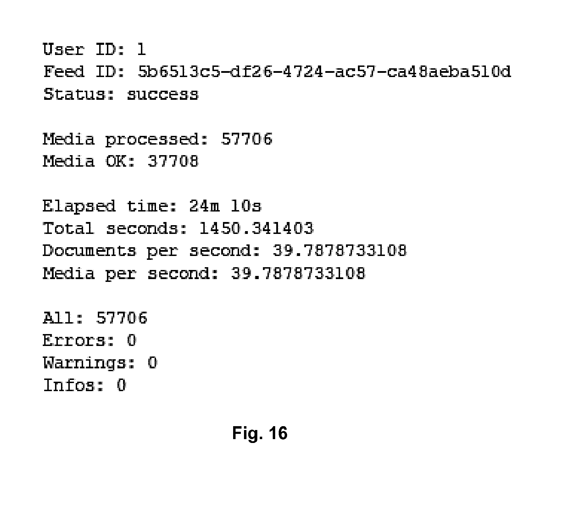

After the upload'u will start its processing on the server (Fig. 16). Data contained in the file will be subjected to multiple verifications. If the document contains links to graphics files, they will be downloaded. As a result, all properly prepared documents will be stored in the repository and will become available for download. When you have finished processing a report is generated that includes information about the number of transformed documents, error messages and time needed to perform the operation.

### Export documents.

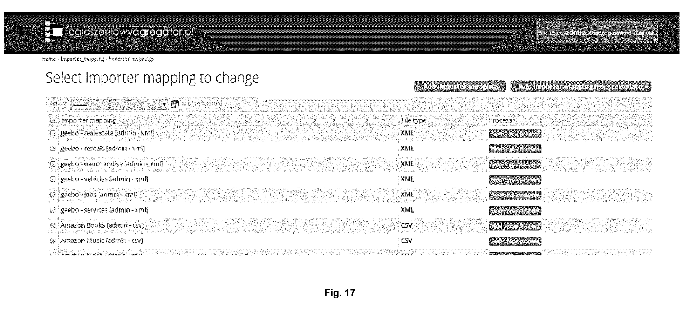

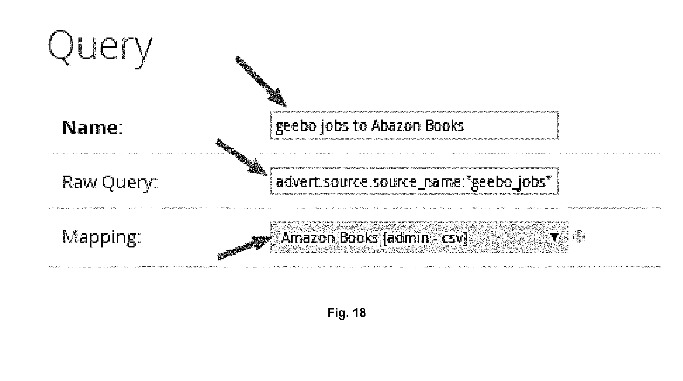

In order to export the selected by our documents from the repository you must go to the section "exporter" queries from the main page, and then select the "Add listing screen to export query" which will take us to the wizard experts (Fig. 17, 18).

We define a new export format mapping to give his name, and queries

The mapping specifies the format of the file, in which you want to export data. We can choose from existing or define new ones. The Raw Query and Query Wizard to create a query, and determine the conditions and criteria for returned documents.

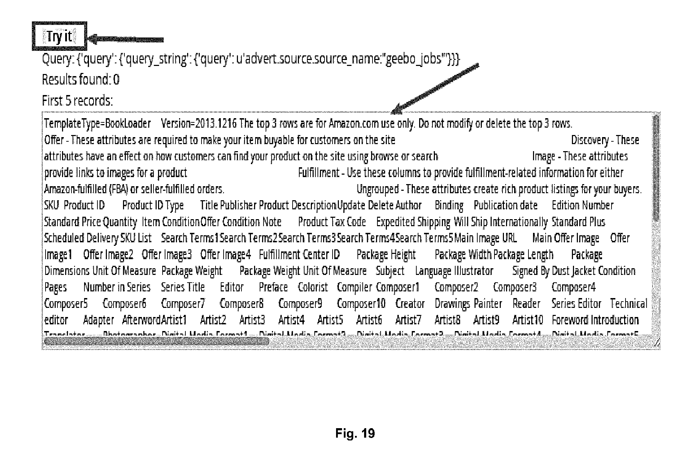

The created queries we can test by selecting the Try It (Fig. 19), which will generate a reply in consisting of the first 5 results.

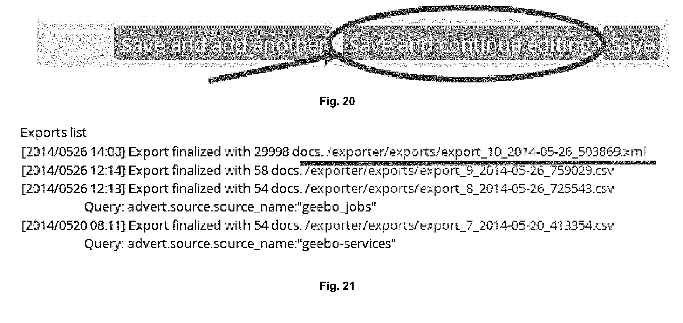

If a query is correct, and the results are those which we expected, we write export definition by selecting the "Save and execute" from the toolbar at the bottom of the page (Fig. 20). The server will start preparing the data file format as indicated by us.

After the generation is completed in the "Export list" will appear in the URL for the file generated will be available for download (Fig. 21).

## Claims

1. A standard data structure, in particular for the distribution of ads among advertisement portals, **characterized in that** it includes the following elements:
a) Date - this is data describing unique to notice or auction information related to its content.
b) Contact_info - this is data describing unique to notice or auction information related to its creator.
c) The system - this is the describing unique to notice or auction information related to its importance and origin.
d) Source - this is data describing unique to notice or auction information related to the source of its origin.
e) Region - this is data describing unique to notice or auction information related to the area of origin.
f) Category - this is data that describes specific categories in the form of key words.

2. The structure according to claim 1, **characterized in that** the element of the "date" data type is text, graphics, audio, video, or multimedia, in particular title of publication or notice or auction, auction, link to graphics or graphics in the form hulking mass Blob and binary, link to a video or video file in binary form, hulking mass Blob and link for a media file (for example, audio or video file in binary form, a hulking mass Blob and table custom fields.

3. The structure according to claims 1 or 2, **characterized in that** the element of the "contact_info" are text data type, in particular e-mail address author's notice or auction house phone number, author's notice or auction, mobile phone number author notice or auction, company name or store name author notice or auction, notice or auction, author's name, address of the author auction notice or notices, or auction.

4. The structure according to claims 1, 2, or 3, **characterized in that** the element of the "system" are data type time and date or number, in particular date of publication or an auction system for aggregation, the date a notice or auction system, in terms of validity, assessment of notice or auction notice.

5. The structure according to any one of the claims from 1 to 4, **characterized in that** the element of the "source" is the text types, in particular the name of the source of origin announced or auction number, source address, and notice to the notice source.

6. The structure according to any one of the claims from 1 to 5, **characterized in that** the element of the "region" is the text types, in particular the name of the country, the name of a region (state, county), postal code, and the name of the street.

7. A method for automatic exchange of ads among advertisement portals in a computer system including at leasr one document repository, **characterized in that** it includes the following steps:
a) Create a file in a specified format, in particular XML, CSV, or JSON, containing the structure of the data according to a standardized format data structure according to any of the objections from 1 to 6 by mapping.
b) Importing data in a fixed format for the document repository.
c) Export selected data in a fixed format of the document repository.
d) Download export data in XML, JSON or CSV file format.

8. The method according to claim 7, **characterized in that** it includes file sharing, as referred to in step (d), for download URL.
